# EUROPEAN PATENT SPECIFICATION

(11) **EP 1 101 558 B1**
(45) Date of publication and mention of the grant of the patent: **27.11.2002**
(21) Application number: 99922506.3
(22) Date of filing: 26.05.1999
(51) Int. Cl.: B23D 61/04

(54) **CIRCULAR SAW WITH HARD TIP**
KREISSÄGE MIT HARTEN SPITZEN
SCIE CIRCULAIRE A POINTES DURES

(30) Priority: 29.05.1998 JP 16625098
(43) Date of publication of application: 23.05.2001
(73) Proprietor: KANEFUSA KABUSHIKI KAISHA, Niwa-gun, Aichi 480-0192 (JP)
(72) Inventor: NISHIO, Satoru, Niwa-gun, Aichi 480-0192 (JP)
(74) Representative: Kuhnen, Rainer Andreas, Dipl.-Ing.
(86) International application number: JP9902782
(87) International publication number: WO99062664

(56) References cited:
- EP-A- 0 286 797
- EP-A- 0 790 096
- JP-A- 63 256 309
- JP-B2- 6 020 663
- JP-B2- 7 049 168
- PATENT ABSTRACTS OF JAPAN vol. 1997, no. 12, 25 December 1997 (1997-12-25) & JP 09 216121 A (TSUNE WAGNER CARBIDE:KK), 19 August 1997 (1997-08-19)

## Description

The present invention relates to a circular saw used for cutting ferrous and non-ferrous materials, and more particularly to a circular saw with hard tips favorably used for cutting hardly cut works such as SUS 304 generating chips with strong adhesiveness to tips of the circular saw. See for example EP-A-0 790 096.

### BACKGROUND ART

A conventional technique related to a circular saw favorably used for cutting hardly cut works such as SUS 304 generating chips with strong adhesiveness to tips of the circular saw is disclosed in Japanese Patent Examined Publication No. 6-20663 (1994) and Japanese Patent Unexamined Publication No. 9-216121 (1997).

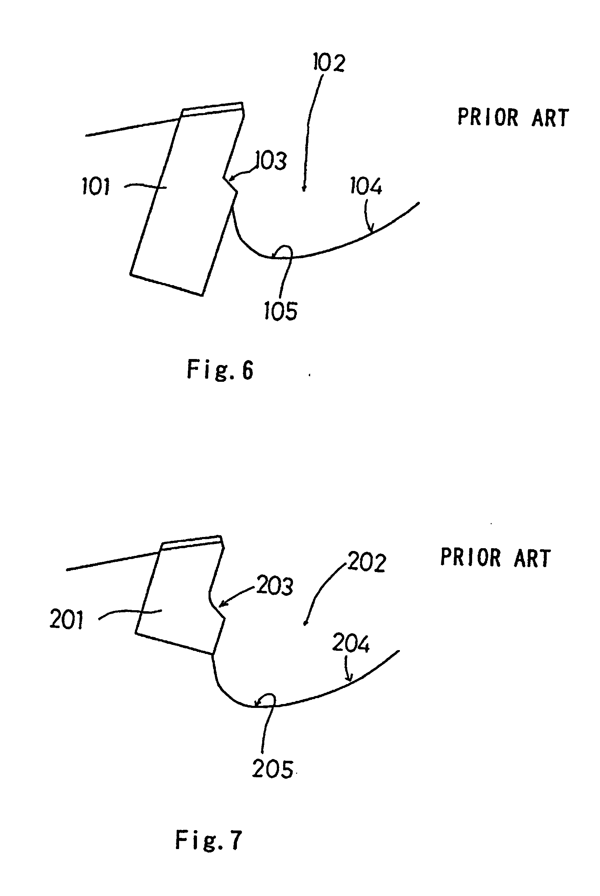

As illustrated in Figs. 6 and 7, both of these prior art references disclose tips 101, 201 with stepped portions 103, 203 being formed on gullets 102, 202 sides wherein chips are raised by the stepped portions 103, 203 for curling these chips to be of a small radius of curvature.

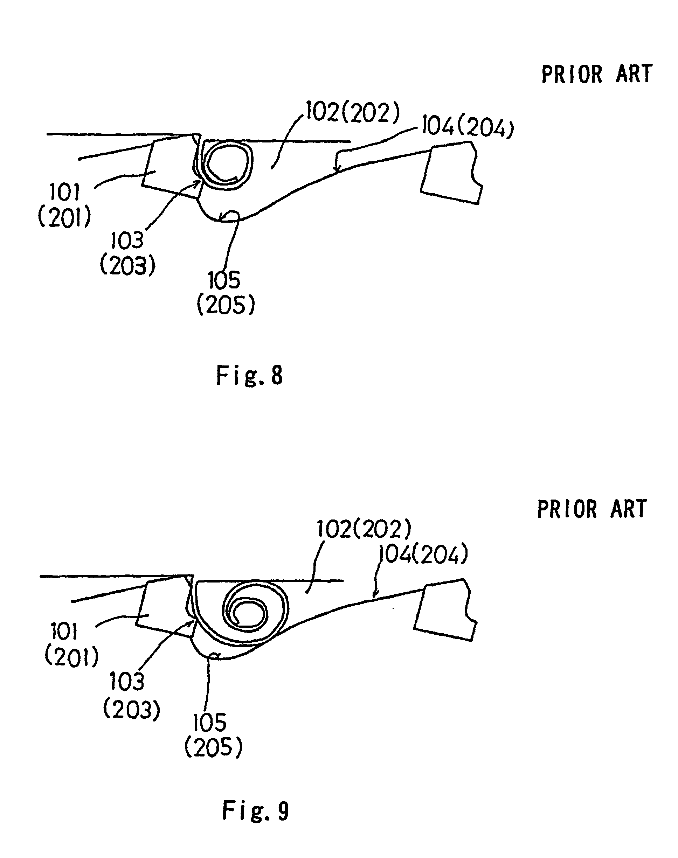

Since chips are generally separated from a work while being compressed at the time of cutting, a maximum length of a chip when cutting a rod-like work will be 1/2 to 1/4 of a diameter of the rod-like work so that the length of the chip will not become too long when cutting a rod-like work which is a work of small diameter, and chips will be generated to be curled at radii in a range of 2 to 4 mm as illustrated in Fig. 8.

At the time of disengagement in which the tips 101, 201 are separated from the work, the chips will jut out from the gullets 102, 202 as if they were repelled therefrom so that no problems are caused in performing discharge of chips.

However, while no problems will be caused in cutting a rod-like work or the like which is of large diameter as long as the chips are short and the above-described case applies as well, there is a tendency in which discharge of chips from the gullets 102, 202 will become worse the longer the chips become.

This is considered to be due to the following reasons. While the chips will be curled chips at small radii of curvature as long as the chips are short immediately after cutting is started with one of the tips 101, 201 abutting against a front end portion of a work, the chips will gradually become longer with the tips 101, 201 moving further to a central portion of the work so that the initially formed curled portions of small radii of curvature abut against the work until it can no further escape upward in the condition as illustrated in Fig. 8. Accordingly, chips will form curled shapes of gradually increasing radii of curvature with a portion of the work thereafter comprising a rolling surface on which the chips are rolled. Upon contacting rear portion sloped surfaces 104, 204 of the gullets 102, 202, the chips will largely curl by being induced by these slopes 104, 204. This condition is illustrated in Fig. 9.

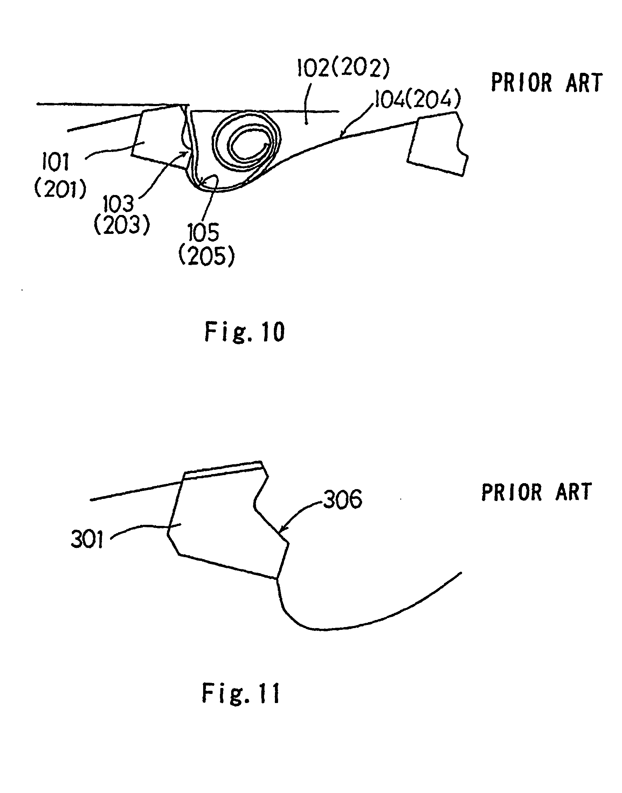

Thereafter, the tips 101, 201 will further move to approach a rear end portion of the work whereupon the contact force between chips and the rear portion sloped surfaces 104, 204 of the gullets 102, 202 will become stronger so that the chips will come to contact first the rear portion sloped surfaces 104, 204 and gradually gullet bottoms 105, 205. Chips that are flown out from the work will finally receive back-pressing force from the gullet bottoms 105, 205 so that the chips abut the stepped portions 103, 203 of the tips whereupon the direction of curling will be reversed on front faces of the tips 101, 201 and the chips will flow while drawing S-shaped curves. This condition is illustrated in Fig. 10.

When cutting progresses in this condition, the chips will assume a high temperature and will be adhered to tip end portions of the tips 101, 201.

In case an aperture dimension to an outer peripheral circle of the gullets 102, 202 is small when compared to a gullet bottom depth, which is a dimension of a tip to a gullet bottom, it is conventionally known through experiences that discharge of chips will become poor. In order to avoid deficiencies in discharge characteristics of chips, the prior art references have tried to improve discharge characteristics of chips by setting the aperture dimension to the outer peripheral surface of the gullets large with respect to the gullet bottom depth, while an increase in the aperture dimension was limited since this meant a decrease in a number of teeth, and such a method was not a satisfactory one.

Another known prior art reference is Japanese Patent Examined Publication No. 7-49168 (1995). In this technique, chips are not lifted through stepped portions; instead, chips are stably induced through contact of a chip inducing face 306 provided on a tip 301 as illustrated in Fig. 11 so that it is possible to form the chips to be of smaller radius of curvature than compared to those of the above-described prior art references as long as the chips are short, and a direction of flowing of the chips will not become unstable.

However, when lengths of the chips exceed a certain level, the chips will not stay to assume small radii of curvature but the radius of curvature of the curls will gradually become larger so that the chips will come to contact at end portions of the chip inducing face 306 on a central side of the circular saw.

More particularly, chips will come to be inducted at stepped portions like in the above prior art references at this stage, and similar phenomena as in the above-described prior art references will also be caused thereafter when the chips become long.

By using the tips as described above with reference to the prior art, chips will be curled at sizes fully corresponding to the interior of the gullets and will be restrained within the gullets in high temperature conditions to thereby cause drawbacks in worsening separation of chips at the time of disengagement.

Further, since the chips will remain in the gullets also after disengagement, the tips will again cut into the work with the chips remaining within the gullets upon a single rotation of the circular saw. Drawbacks were accordingly presented in which chips of a previous rotation will cut in to cause chipping of the cutting edges or in which a part of the cutting faces of the tips will fall off together with the chips when forcibly removing adhered chips by using a chip eliminating brush to thereby form holes on cutting faces of the tips and degrade cutting performances of the circular saw.

Moreover, in the two prior art references related to tips comprising stepped portions, chips are lifted at the stepped portions of the tips, that is, at edge lines thereof to result in unstable flowing directions of the chips. As a result, lateral portions of the chips would damage surfaces at which a work is cut and degrade the quality of the work upon cutting.

The present invention has been made in view of these drawbacks as presented by the prior art, and it is an object thereof to provide a circular saw with tips with which chips are curled at small radii of curvature even if the chips becomes longer, with which chips will not strongly contact gullet bottoms and with which favorable separating conditions for the chips can be maintained with the chips accumulating to be small in size without the necessity of enlarging a pitch for the saw teeth.

### DISCLOSURE OF THE INVENTION

In order to achieve the above objects, the present invention as described in claim 1 provides a circular saw in which a plurality of tooth bodies are provided on an outer periphery of a disk-like base metal comprising a main body of the circular saw, in which spaces are formed between respective tooth bodies comprising gullets, and in which respective hard tips made of a hard material for comprising tips are fixedly attached to respective tooth bodies, each tip comprising a planar first cutting face forming a negative angle on a tip end portion thereof, a planar second cutting face forming a positive angle and being formed to be successive to the first cutting face, and a chip inducing face being formed to be successive to the second cutting face with a minute curved surface interposed between, wherein the chip inducing face is formed to be comprised of a plurality of separated chip inducing faces that are flexed in a convex manner to the gullet side, of convex arc surfaces, or of a combination of these surfaces such that chips are made to curl at small radii of curvature through chip inducing faces located closer to the second cutting face as long as the chips are short while chips are made to curl at gradually increasing radii of curvature through chip inducing faces located remoter from the second cutting face when the chips become longer in order to prevent chips from strongly contacting gullet bottoms.

In the above-described circular saw, the chip inducing faces are formed to assume convex flex surfaces or convex arc surfaces such that positions of the chip inducing faces to which the chips contact are varied in accordance with lengths of the chips so as to enable constant curling of the chips at optimal radii of curvature.

It is therefore possible to accumulate the chips to be small in size and discharge of chips may be smoothly performed at the time of disengagement.

The invention as described in claim 2 provides a circular saw in which a virtual cylinder having a radius of 2 to 4 mm with the second cutting face serving as a contact surface is assumed to be on the gullet side on an intersecting position between the first cutting face and the second cutting face with the chip inducing faces being formed such that the positions of the chip inducing faces that are located closer to the second cutting faces contact this virtual cylinder.

According to the circular saw of the invention, the effect of the invention of claim 1 can be achieved more precisely.

The invention as described in claim 3 provides a circular saw in which a refracting angle formed by the chip inducing faces located at positions at which the virtual cylinder contacts and by the chip inducing faces located remotest from the second cutting faces is 5° to 20° .

In the above-described circular saw, angles of a plurality of chip inducing faces are set to be optimal angles for abutting the chips so that constant curling of the chips at optimal radii of curvature can be achieved.

The invention as described in claim 4 provides a circular saw in which the length of the first cutting faces of the circular saw is set to be 0 mm, that is, no first cutting faces are formed.

In the above-described circular saw, the tips will have cutting edges of an acute angle so that cutting characteristics can be improved when cutting of soft non-ferrous metals.

The above-described arrangement of the circular saw with hard tips according to the present invention enables it to exhibit the following effects.

According to the circular saw of the invention as described in claim 1, chips are made to curl to be relatively small even if the chips become longer so that chips are prevented from contacting gullet bottoms. Thus, chips will also be prevented from being strongly pressed against cutting edges of the tips but the chips will flow in an unforced manner such that only a small amount of heat is generated upon forming the chips and the chips will not accumulate heat, either. Consequently, chips are prevented from adhering to the tips so that easy separation of chips is enabled at the time of disengaging the tips from a work, and it is possible to perform cutting by using tip blade shapes of identical shapes regardless of the size of the work.

Moreover, since chips will stably flow along the chip inducing faces, surfaces at which the work is cut will not be scratched by lateral surfaces of chips, and the quality of cut surfaces of the work can be improved.

Since small curls of chips are formed also when cutting a work that is of large diameter, it is possible to design the gullets to be small and to reduce the pitch of the tooth bodies accordingly which in turn enables an increase in the number of teeth. It is therefore possible to increase a feeding speed of the circular saw provided that amounts of chips that are cut with a single tip are identical.

The chip inducing faces being formed in an elongated manner as a whole, the tips become longer in the radial direction of the circular saw so that strength for blaze fixing can consequently be increased.

According to the circular saw of the invention as described in claim 2, since chips are cut from the work and curled by the first chip inducing faces in an effective manner, the radii of curvature of curling becomes smaller to thereby enable accumulation of the chips to be small in size.

According to the circular saw of the invention as described in claim 3, abutting positions of curled chips to the tips are sequentially moved to chip inducing faces on a central side of the circular saw with a sequential increase in length of the chips that are cut from the work, and radii of curvature of the curls sequentially becomes larger in accordance therewith. Thus, chips are curled to assume beautiful spiral shapes from a central portion to an outer peripheral portion such that these chips are accumulated to be small in size.

According to the circular saw of the invention as described in claim 4, since the tips cut the work at an acute angle, they may be suitably used for cutting non-ferrous soft materials.

### BRIEF DESCRIPTION OF THE DRAWINGS

Fig. 1 is an explanatory view illustrating a tip portion of the present invention.
Fig. 2 is a view seen from direction A-A in Fig. 1.
Fig. 3 is an explanatory view illustrating a curling condition when the chip is short.
Fig. 4 is an explanatory view illustrating a curling condition when the chip is long.
Fig. 5 is an explanatory view of another embodiment of a chip inducing face, wherein Fig. 5 A is a view in which a second chip inducing face is separated into a plurality of planes and Fig. 5 B is a view in which the second chip inducing face assume an arc-like shape.
Fig. 6 is an explanatory view illustrating a tip portion of the prior art.
Fig. 7 is an explanatory view illustrating a tip portion of the prior art.
Fig. 8 is an explanatory view illustrating a curling condition of the prior art when the chip is short.
Fig. 9 is an explanatory view illustrating a curling condition of the prior art when the chip becomes longer.
Fig. 10 is an explanatory view illustrating a curling condition of the prior art when the chip has reached a sufficient length.
Fig. 11 is an explanatory view illustrating a tip portion of the prior art.

### BEST MODE FOR CARRYING OUT THE INVENTION

### (EMBODIMENT 1)

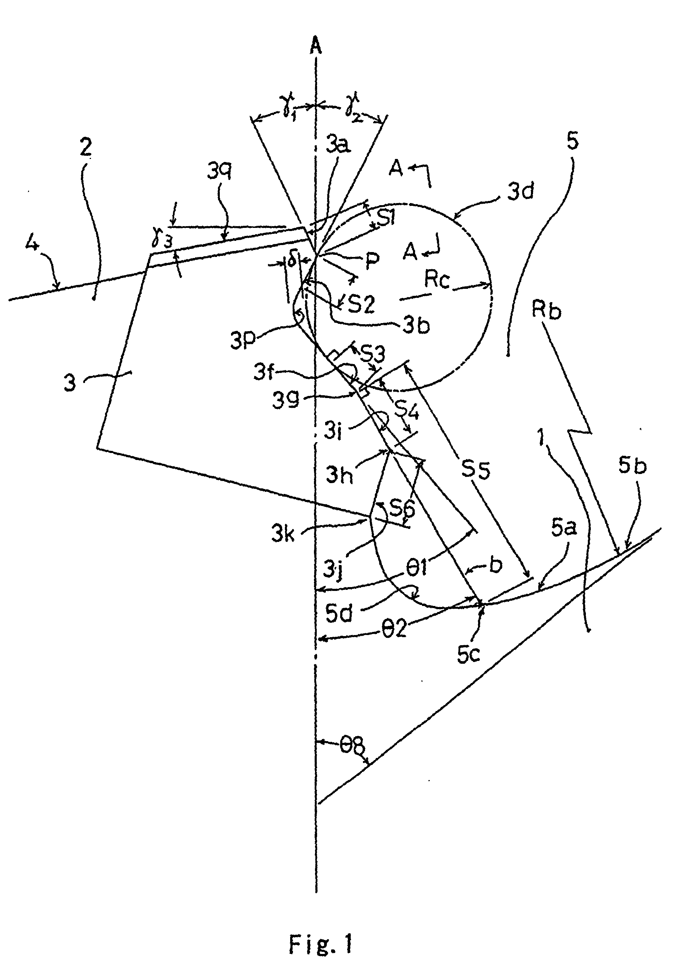

The first embodiment will now be explained with reference to Fig. 1 in which a tip is mounted to a tooth body of a circular saw. The tip is comprised of a hard tip made, for instance, of cemented carbide such as cermet or ceramics, a tip made of a similarly hard material that are equal or better than the above materials, or a generally used tip that underwent coating to exhibit wear resistance.

A plurality of tooth bodies 2 for mounting the tips are formed, for instance, at equal intervals on an outer periphery of a disk-like base metal 1 that comprises a main body of the circular saw. Each tip 3 that comprises a saw tooth is fixedly attached to one tooth body 2 through blazing with a part thereof being embedded into the base metal 1. A gullet bottom 5a is provided through shallow cutting such that chips are prevented from fitting into this gullet bottom 5a upon being introduced from a cutting face to a chip inducing face of the tip 3 and curling, and the gullet bottom 5a is formed to be smoothly succeeding from a rear surface 5b of the gullet 5 to a flank 4 of the following tooth body 2.

In order to secure strength of the cutting edges at tops of the teeth for performing cutting through contact with a work, each tip 3 comprises a planar first cutting face 3a which is formed at a first cutting angle γ1 forming a negative angle and as a plane at length S1. A planar second cutting face 3b is formed to be successive to the first cutting face 3a at a second cutting angle γ2 forming a positive angle and at length S2 on a central side of the circular saw.

Extending from the second cutting face 3b, a chip inducing face is formed. In the illustrated embodiment, the chip inducing face is formed to be comprised of two planes, that is, a first chip inducing face 3f and a second chip inducing face 3i, wherein these two planes are flexed in a convex manner to the gullet 5 side. By assuming a virtual cylinder 3d having a radius Rc on the gullet side with the second cutting face 3b serving as a contact surface at an intersecting position P between the first cutting face 3a and the second cutting face 3b, the planar first chip inducing face 3f of length S3, which is exceeding the length S2 of the second cutting face, is formed such that the first chip inducing face 3f contacts the virtual cylinder 3d on a central side of the saw at angle θ1 with respect to a cutting angle reference surface A.

An extension plane of the second cutting face 3b to the central side of the circular saw and an extension plane of the first chip inducing face 3f to the cutting edge side are connected at a minute curved surface 3p to which no curled chips contact, wherein a clearance dimension between a surface of the virtual cylinder 3d of radius Rc and the minute curved surface 3p is δ.

The second chip inducing face 3i is further formed at angle θ2 to the cutting angle reference surface A extending from a position 3g of an end portion on the central side of the circular saw of the first chip inducing face 3f to a position 3h of length S4 on the gullet 5 side located on the central side of the circular saw.

The second chip inducing face 3i is set such that the intersecting position P will be located on the gullet 5 side with respect to the virtual extension plane of the second chip inducing face 3i on the cutting edge side.

Each tip 3 includes an end edge portion 3j at length S6 from this position 3h to the central side of the circular saw, and the gullet bottom 5a is formed to be successive from a lower end position 3k of this length S6. Between the position 3h and the intersecting position 5c in the gullet bottom 5a on the extension plane of the second chip inducing plane 3i on the central side of the saw tooth, the gullet bottom 5a is formed to assume a concave portion 5d that is indent from the virtual extension plane of the second chip inducing face 3i.

The concave portion 5d may alternatively formed on a position that is stepped down by a slight dimension from the position 3k to the tooth body 2 side.

A curved surface extending from the gullet bottom 5a to a rear portion sloped surface 5b of the gullet 5 is formed to be a cylindrical concave surface of radius Rb with its center being located outside of a circumcircle of the saw blade, wherein the rear portion sloped surface 5b is raised at angle θ8 with respect to the cutting angle reference surface A and to be successive to the flank 4 of the following tooth body 2.

A flank 3q is formed at flank angle γ3 rearward of the first cutting face 3a on a head portion of each tip 3. A chamfering 3m of size S8 is formed on both end portions of the blade width of the flank 3q for preventing chipping to extend from the first cutting face 3a over then entire length of the flank 3q.

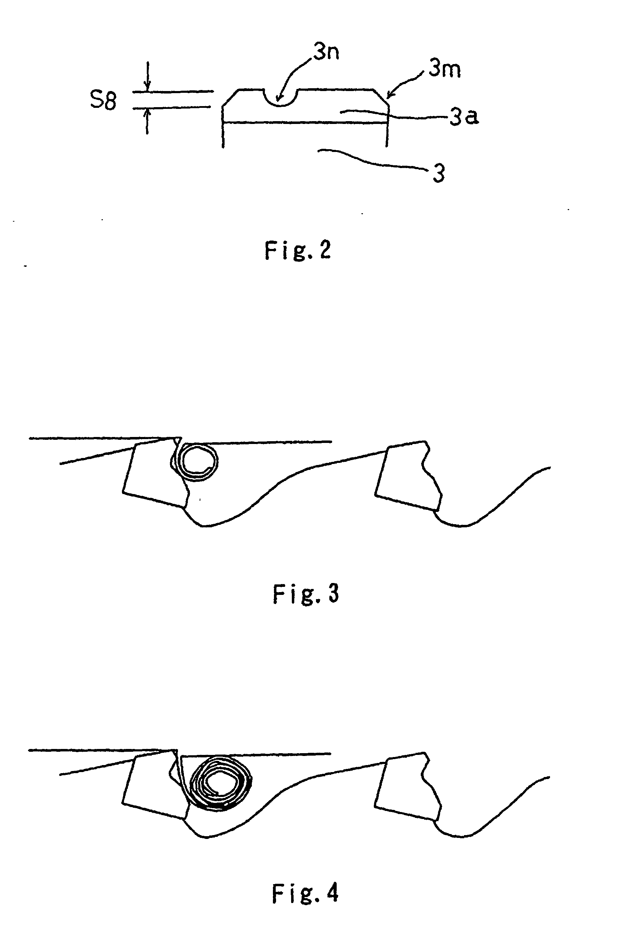

Chip separating grooves 3n are cut on respective tips to be alternately inclined in vertical directions from the center of the tooth width to extend from the first cutting face 3a to the flank 3q at the head portions of the tips 3. This condition is illustrated in Fig. 2.

Lengths and angles of respective portions of the illustrated embodiment in which the tips 3 and gullets 5 are arranged as in the above-described manner are as indicated in Table 1.

**[Table 1]**

| | ferrous work | | non-ferrous work |
|---|---|---|---|
| | used range | preferable value | used range |
| γ1 | -10° ∼ -30° | -20° ∼ -25° | - |
| S1 | 0.15 ∼ 0.50mm | dependent on a feeding speed | 0mm |
| γ2 | 0 ∼ +20° | +10° | +5° ∼ +25° |
| S2 | 0.2 ∼ 0.6mm | 0.45mm | the same as left |
| δ | 0.05 ∼ 0.2mm | 0.1mm | " |
| Rc | 2 ∼ 4mm | 2.4mm | " |
| γ3 | 3°∼ 10° | 6°∼ 8° | " |
| θ1 | 15° ∼ 45° | 30° | " |
| S3 | 0 ∼ 0.3mm | 0.1mm | " |
| θ2 | 5°∼ 40° | 15° ∼ 20° | " |
| S4 | 0.5 ∼ 1.2mm | 0.8mm | " |
| S5 | 1.5 ∼ 4mm | vary with number of teeth | " |
| θ8 | 40° ∼ 60° | 50° | " |
| Rb | 2 ∼ 4mm | vary with number of teeth | " |

### [TEST RESULTS]

### <CUTTING CONDITIONS>

CIRCULAR SAW: Diameter: 280 mm; tooth thickness: 2.0 mm; thickness of base metal: 1.7 mm; number of teeth: 80 (grooved blades); revolution speed: 90 rpm; feeding: 0.08 mm/tooth.
WORK: Material: SUS 304; size: φ65 mm.

Upon performing cutting by using tips 301 of Japanese Patent Examined Publication No. 7-49168 described with reference to the prior art, chips would curl along chip inducing faces and favorably separate at the time of disengagement in case the cutting arc length was not more than 45 mm. However, when the cutting arc length started to exceed 45 mm, curls would start to become unstable, and chips strongly adhere to the first cutting faces so as not to be discharged from the gullets at the time of disengagement so that chips would cut-in when performing the following cutting after a single rotation of the circular saw to thereby cause chipping.

When it was tried to forcibly remove the chips by using a removing brush, base materials of the tips of the first cutting faces would peel off to form holes on the tips. In repeating such operations, even larger chippings were caused.

In contrast thereto, when employing the tips 3 of the present invention, the chips were curled to be small in size, favorable separate at the time of disengagement, and easy discharge thereof was enabled although the cutting arc length would exceed 45 mm.

### [ACTIONS]

A work is cut through the tips 3, shred by the chip separating grooves 3n, and cut out through the first cutting faces 3a. The chips will slide on surfaces of the second cutting faces 3b to flow out along the first chip inducing faces 3f and curled at a radius of curvature that approximates to a radius of curvature of the virtual cylinder 3d inwardly contacting the second cutting faces 3b and the first chip inducing faces 3f. This condition is illustrated in Fig. 3. Upon performing experiments, it was found that favorable results could be obtained when the radius of the virtual cylinder 3d was set in the range of 2 to 4 mm.

While these curls continue as long as the chips stay short, the radii of curvature of the curls will increase with the increase in lengths of the chips. Accompanying the increase in size of the curls, the contact with the chips will smoothly move from the first chip inducing faces 3f to the second chip inducing faces 3i such that curling is performed in a stable condition with the chips flowing out along the surfaces of the second chip inducing faces 3i. This flow is continued in this condition so that the chips are curled without strongly contacting the gullet bottoms 5a but accumulated within the gullets 5 to be small in size. This condition is illustrated in Fig. 4.

It should be noted that further surfaces may be interposed between the second cutting faces and the first chip inducing faces unless chips flowing from the second cutting faces to the first chip inducing faces are hindered thereby.

### [EMBODIMENT 2]

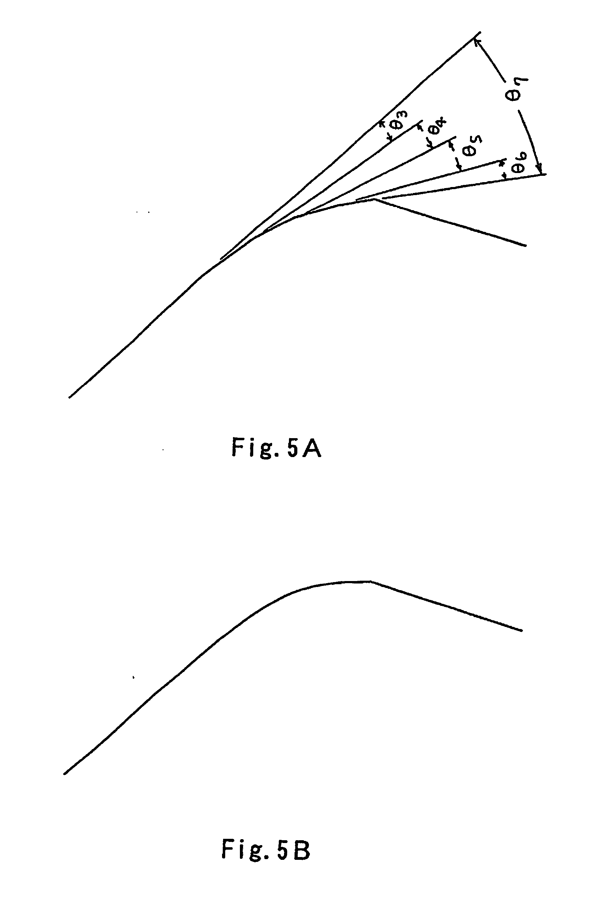

The second embodiment is arranged in that the second chip inducing faces 3i of Fig. 1 illustrating the first embodiment are separated into a plurality of parts, wherein the respectively separated parts are connected to a convex flexed portion on the gullet 5 side. This condition is illustrated in Fig. 5(a).

Upon performing experiments, it was found that favorable results could be obtained in case refracting angles θ3, θ4, θ5, and θ6 of the flexed portions comprised by the respective inducing surfaces and a refracting angle θ7 formed between the first chip inducing surfaces and final chip inducing surfaces in Fig. 5(a) were set to be not less than 5° .

In increasing in length, the chips would sequentially move from the first chip inducing faces to the separated chip inducing faces on the central side of the circular saw to be curled at sequentially increasing radii of curvature.

However, no chips would contact to separated chip inducing faces which angles exceeded 20° and would either hardly be induced thereby or if ever induced, the chips would not be curled to be small in size.

It should be noted that the chip inducing faces of the illustrated might alternatively be arranged of arc-like surface instead of refracted surface (Fig. 5(b)).

In this case, an angle formed by a contact surface of a position to which the virtual cylinder 3d contacts and a contact surface of a terminating end portion of the chip inducing faces will correspond to the refracting angle θ7 wherein favorable results could be obtained in case the angle was not less than 5° while chips would hardly contact the chip inducing faces of portions that exceeded 20° and would hardly be induced thereby.

### [EMBODIMENT 3]

In the third embodiment, the length S1 of the first cutting face 3a of Fig. 1 of the first embodiment has been set to 0 mm. In other words, the flank 3q has been formed to be immediately extending from the intersection P of the first cutting face 3a and the second cutting face 3b so that the tips comprised cutting edges of an acute angle, and cutting characteristics could be improved when a work was of non-ferrous soft metal.

### INDUSTRIAL APPLICABILITY

As explained so far, the circular saw with hard tips of the present invention is effective for cutting ferrous and non-ferrous materials and especially hardly cut works such as SUS 304 generating chips with strong adhesiveness to tips since chips are curled at small radii of curvature even if the chips becomes longer, chips will not strongly contact a gullet bottom and favorable separating conditions for the chips can be maintained with the chips accumulating to be small in size without the necessity of enlarging a pitch of the teeth.

## Claims

1. A circular saw with hard tips in which a plurality of tooth bodies are provided on an outer periphery of a disk-like base metal comprising a main body of the circular saw, **characterized in that** the circular saw with hard tips being a circular saw in which spaces are formed between respective tooth bodies comprising gullets, and in which respective hard tips made of a hard material for comprising tips are fixedly attached to respective tooth bodies, each tip comprising a planar first cutting face forming a negative angle on a tip end portion thereof, a planar second cutting face forming a positive angle and being formed to be successive to the first cutting face, and a chip inducing face being formed to be successive to the second cutting face with a minute curved surface interposed between,
wherein the chip inducing face is formed to be comprised of a plurality of separated chip inducing faces that are flexed in a convex manner to the gullet side, or of convex arc surfaces, or of a combination of these surfaces such that chips are made to curl at small radii of curvature through chip inducing faces located closer to the second cutting face as long as the chips are short while chips are made to curl at gradually increasing radii of curvature through chip inducing faces located remoter from the second cutting face when the chips become longer in order to prevent chips from strongly contacting gullet bottoms.

2. The circular saw with hard tips as claimed in claim 1, wherein a virtual cylinder having a radius of 2 to 4 mm with the second cutting face serving as a contact surface is assumed to be on the gullet side on an intersecting position between the first cutting face and the second cutting face with the chip inducing faces being formed such that the positions of the chip inducing faces that are located closer to the second cutting faces contact this virtual cylinder.

3. The circular saw with hard tips as claimed in claim 2, wherein a refracting angle formed by the chip inducing faces located at positions at which the virtual cylinder contacts and by the chip inducing faces located remotest from the second cutting faces is 5° to 20° .

4. The circular saw with hard tips as claimed in claim 1,2 or 3, wherein a length of the first cutting face is set to be 0 mm.

## Patentansprüche

1. Kreissäge mit harten Spitzen, in welcher eine Mehrzahl von Zahnkörpern an einem äußeren Umfang eines scheibenförmigen Basismetalls vorgesehen sind, welches einen Hauptkörper der Kreissäge bildet,
**dadurch gekennzeichnet, daß** die Kreissäge mit den harten Spitzen eine Kreissäge ist, bei welcher Räume zwischen zugehörigen Zahnkörpern ausgebildet sind, welche Hakenzähne aufweisen, und bei welchen entsprechende, aus einem hartem Werkstoff hergestellte harte Spitzen zum Aufweisen von Spitzen fest an den entsprechenden Zahnkörpern angefügt sind, wobei jede Spitze eine planare erste Schneidefläche, welche einen negativen Winkel an einem Endabschnitt der Spitze bildet, eine planare zweite Schneidefläche, welche einen positiven Winkel bildet und sich an die erste Schneidefläche anschließend ausgebildet ist, und eine Spanleitfläche, welche sich der zweiten Schneidefläche mit einer zwischen ihnen angeordneten scharf gekrümmten Fläche anschließend ausgebildet ist, aufweist,
wobei die Spanleitfläche ausgebildet ist, um eine Mehrzahl von getrennten Spanleitflächen, welche konvex zur Seite des Hakenzahns gebogen sind, oder von konvexen Bogenflächen, oder von einer Kombination dieser Flächen derart aufzuweisen, daß sich die Späne, solange sie kurz sind, durch die näher an der zweiten Schneidefläche angeordneten Spanleitflächen mit kleinen Krümmungsradien aufrollen, während sich die Späne, wenn sie länger werden, aufgrund der von der zweiten Schneidefläche weiter entfernt angeordneten Spanflächen mit allmählich zunehmendem Kurvenradien aufrollen, damit die Späne die Hakenzahnböden nicht stärker berühren.

2. Kreissäge mit harten Spitzen gemäß Anspruch 1, bei welcher von einem virtuellen Zylinder mit einem Radius von 2 bis 4 mm mit der als Kontaktfläche dienenden zweiten Schneidefläche angenommen wird, daß er sich auf der Seite des Hakenzahns an der Schnittposition zwischen der ersten Schneidefläche und der zweiten Schneidefläche befindet, wobei die Spanleitflächen derart ausgebildet sind, daß die Positionen der Spanleitflächen, welche näher an den zweiten schneidenden Flächen angeordnet sind, diesen virtuellen Zylinder berühren.

3. Kreissäge mit harten Spitzen nach Anspruch 2, bei welcher ein durch die Spanleitflächen, welche an Position angeordnet sind, in welchen der virtuelle Zylinder berührt, und durch die von den zweiten Schneideflächen entferntest angeordneten Spanleitflächen gebildeter Brechungswinkel 5° bis 20° beträgt.

4. Kreissäge mit harten Spitzen nach einem der Ansprüche 1 bis 3, in welcher eine Länge der ersten Schneidefläche auf 0 mm festgelegt ist.

## Revendications

1. Scie circulaire à pointes dures dans laquelle une pluralité de corps de dent sont prévus sur une périphérie extérieure d'une base métallique en forme de disque constituant un corps principal de la scie circulaire, **caractérisée en ce que** la scie circulaire à pointes dures est une scie circulaire dans laquelle des espaces sont formés entre des corps de dent respectifs pour définir des gorges, et dans laquelle des pointes dures respectives en matière dure pour constituer des pointes sont attachées de façon fixe à des corps de dent respectifs, chaque pointe comprenant une première face de coupe plane définissant un angle négatif sur sa partie d'extrémité de dent, une deuxième face de coupe plane définissant un angle positif et étant formée à la suite de la première face de coupe, et une face de génération de copeau étant formée à la suite de la deuxième face de coupe avec interposition d'une petite surface courbe entre ces dernières,
dans laquelle la face de génération de copeau est composée d'une pluralité de faces de génération de copeau séparées qui sont déviées d'une manière convexe vers le côté de la gorge, ou de surfaces courbes convexes, ou d'une combinaison de ces surfaces, de sorte que les copeaux forment des boucles de petits rayons de courbure sous l'action des faces de génération de copeau les plus proches de la deuxième face de coupe tant que les copeaux sont courts, tandis que les copeaux sont amenés à former des boucles de rayons de courbure progressivement croissants sous l'action des faces de génération de copeau les plus éloignées de la deuxième face de coupe lorsque les copeaux deviennent plus longs, afin d'empêcher les copeaux de venir fortement en contact avec les fonds de gorge.

2. Scie circulaire à pointes dures selon la revendication 1, dans laquelle un cylindre virtuel ayant un rayon de 2 à 4 mm, la deuxième face de coupe servant de surface de contact avec ce cylindre, est supposé être sur le côté de la gorge à une position d'intersection entre la première face de coupe et la deuxième face de coupe, les faces de génération de copeau étant formées de sorte que les positions des faces de formation de copeau qui sont les plus proches des deuxièmes faces de coupe sont en contact avec ce cylindre virtuel.

3. Scie circulaire à pointes dures selon la revendication 2, dans laquelle un angle de déviation défini par les faces de génération de copeau situées à des positions auxquelles le cylindre virtuel est en contact et par les faces de génération de copeau les plus éloignées des deuxièmes faces de coupe est de 5 degrés à 20 degrés.

4. Scie circulaire à pointes dures selon la revendication 1, 2 ou 3, dans laquelle une longueur de la première face de coupe est fixée à 0 mm.
